# EUROPEAN PATENT APPLICATION

(11) **EP 2 695 812 A1**
(43) Date of publication of application: **12.02.2014**
(21) Application number: 12179529.8
(22) Date of filing: 07.08.2012
(51) Int. Cl.: B64D 11/02, B64D 11/04

(54) **Hybdrid water/waste system architecture**

(71) Applicant: Airbus Operations GmbH, 21129 Hamburg (DE)
(72) Inventor: Dannenberg, Andreas, 21629 Neu Wulmstorf (DE)
(74) Representative: Maiwald Patentanwalts GmbH

(57) **Abstract**

Aircraft architecture comprising aircraft toilet units (140) having a combined decentralized or local flush system (110) and a centralized waste water system, as well as lavatories and galleys having decentralised hybrid fresh water / waste water units (120, 220) integrated in aircraft trolleys .

## Description

### FIELD OF THE INVENTION

The present invention relates to an aircraft architecture, an aircraft trolley, an aircraft monument, an aircraft water supply unit and an aircraft having a hybrid water/waste system architecture, and in particular to respective devices having a combined decentralized and centralized water supply and waste system.

### BACKGROUND OF THE INVENTION

In present commercial aircraft, the water and waste systems are designed as centralized water and waste systems. This means, that the supply and the disposal for the used or generated materials like potable water, waste water, toilet waste is centralized. Within commercial cargo aircraft and within no-commercially used passenger aircraft, there also exist applications with decentralized systems or system-parts being not transferable to commercial passenger aircraft without fundamental adaptions or changes.

WO 2010/133646 for example describes an aircraft monument comprising an autonomous water module for aircrafts, embodied as a water trolley comprising a device for receiving a water module having a container with standard measurements of a trolley containing a fresh water tank, a device for dispensing fresh water and a device for discharging grey water.

DE 10 2006 042 300 describes a self-supplying washing room for mobile use.

All of the above described references, however, do not describe a combination of a centralized and decentralized system.

### SUMMARY OF THE INVENTION

It would be desirable to provide an improved aircraft architecture, aircraft trolley, aircraft monument, aircraft water supply unit and aircraft contributing to an architecture combination of centralized and decentralized water system parts.

The invention provides an aircraft architecture, an aircraft trolley, an aircraft monument, an aircraft water supply unit, and an aircraft according to the subject-matter of the independent claims. Further embodiments are incorporated in the dependent claims.

It should be noted that the following described exemplary embodiments of the invention apply also for the aircraft architecture, the aircraft trolley, the aircraft monument, the aircraft water supply unit, and the aircraft, respectively.

According to an exemplary embodiment, there is provided an aircraft architecture comprising a plurality of toilet units, each toilet unit having a waste water terminal, wherein at least one of the plurality of toilet units comprises a local flush system, wherein the flush system has a receptacle for a replaceable flush fluid container, wherein the waste water terminal of each of the plurality of toilet units is connectable to a centralized waste water system of an aircraft.

Thus, it is possible to have a plurality of toilet units commonly using a centralized waste water system, but having at least partially a decentralized flushing system. Therefore, the water supply, or the flush fluid supply may be organized decentralized, so as to easily adapting and exchanging the local flush system, wherein the waste is organized centralized. It should be noted that the term "fluid" means liquids and aerosols, which may be used for a liquid supply system, like for example a fluid flush system.

According to an exemplary embodiment, the aircraft architecture further comprises at least one aircraft water supply unit, each water supply unit having a container, a fresh water supply interface, and a waste water drain interface, wherein the container includes fresh water volume and a waste water volume, wherein the fresh water volume is connected to the fresh water supply interface, and wherein the waste water volume is connected to the waste water drain interface.

Thus, the entire aircraft architecture may be provided with a decentralized fresh or white water supply and a decentralized waste or grey water drain as well as a centralized black water or waste water drain. It should be noted that fresh water may be potable water. In particular, a water supply unit is part of the aircraft architecture providing a combination of a decentralized fresh water supply and a decentralized waste water drain within a single unit, so that the fresh water supply and a grey water or waste water drain in combination may be supplied as a single unit, which unit allows an easy service interval and an easy maintenance in case of failure. It should be noted that the term interface may represent a fixedly connected unit as well as a releasably connectable unit.

According to an exemplary embodiment, the fresh water volume has at least one flexible wall section and the waste water volume has at least one flexible wall section, wherein the flexible wall section of the waste water volume is movable towards the flexible wall section of the fresh water volume upon filling the waste water volume with waste water.

It should be noted that the flexible wall section of the fresh water volume and the flexible wall section of the waste water volume do not mandatorily have to be in contact with each other. However, the flexible wall section of the waste water volume is movable towards the flexible wall section of the fresh water volume, so that the consumed space may be commonly used. In particular when taking out the fresh water, for example for washing purposes, the fresh water volume decreases, so that the flexible wall section allows reducing the covered volume of the fresh water volume. The fresh water volume therefore releases a particular volume, which may be occupied later on by the waste water volume owing to the flexible wall section of the waste water volume. Usually, when taking out fresh water from the fresh water volume, the fresh water volume decreases, but at the same time waste water is generated, so that the waste water volume increases. In particular, when using the water supply unit as a hand washing unit or the like, almost the same amount of fresh water taken out from the fresh water volume will later on flow into the waste water volume, so that the consumed space may be shared. As a result, the entirely consumed space by the fresh water volume and the waste water volume together substantially does not change, so that a considerably amount of space may be saved when using the space by the fresh water volume and the waste water volume commonly.

According to an exemplary embodiment, the aircraft architecture further comprises a heater, wherein the heater is functionally coupled between the fresh water volume and the fresh water supply interface.

Thus, it is possible to heat the fresh water taken from the fresh water volume to supply heated fresh water. This may be useful for example for hand washing or for preparing hot meal based on hot water. It should be noted that the fresh water supply interface may be a coupling unit for automatic coupling with a counter interface at the aircraft side, so that the aircraft water supply unit may be received within a bay or the like so that the fresh water supply interface and the waste water drain interface at the water supply unit side automatically couple with respective fresh water supply interface and waste water drain interface at the aircraft side. However, it should be noted that the fresh water supply interface as well as the waste water drain interface may be also fixedly connected to other units like for example a water tap or a sink.

According to an exemplary embodiment, the fresh water volume of the aircraft architecture and the waste water volume of the aircraft architecture share at least one wall formed by the flexible wall section of the waste water volume and the flexible wall of the fresh water volume.

Thus, there is an immediate interrelation between the both flexible wall sections together forming a separation between a waste water volume and a fresh water volume. It should be noted that the flexible wall section of the waste water volume may be a membrane and the flexible wall of the fresh water volume may also be a separate membrane, so that both membranes together form the wall between the waste water volume and the fresh water volume. However, it should be noted that there may also be one membrane formed as a single layer or a laminated layer between the fresh water volume and the waste water volume. It should be noted that the wall formed by the both flexible wall sections may include a rigid section and a resilient section, wherein for example the resilient section may be of rubber or the like. However, the flexible wall may also be formed by a linear moving rigid wall, compared to a cylinder in a cylinder housing. The particular aspect may be considered in sharing a volume.

According to an exemplary embodiment, the aircraft architecture further comprising an aircraft trolley having included the aircraft supply unit as described above, wherein the container is located inside a trolley housing, wherein the fresh water supply interface is releasably connectable to a water supply system of fresh water consuming devices at the aircraft side, wherein the waste water drain interface is releasably connectable to a drain system of the fresh water consuming devices at the aircraft side.

Thus, it is possible to put the aircraft trolley in a particular receptacle or bay to connect the waste water drain interface with a respective interface coupling portion at the aircraft side as well as the fresh water supply interface to a fresh water coupling interface at the aircraft side. The aircraft trolley and/or the aircraft may be provided with a signaling device informing the user on a proper coupling of the interfaces. It should be noted that the fresh water supply interface may also be releasably connectable to a water supply system of fresh water consuming devices which consuming devices are different from those consuming devices whose drain systems are releasably connected to the waste water drain interface of the aircraft trolley.

According to an exemplary embodiment, at least one of the fresh water supply interface and the waste water drain interface of the aircraft architecture comprise automatic coupling units being adapted for automatic coupling upon rolling the aircraft trolley into a respective bay, the bay comprising a counter coupling unit of a water supply system of fresh water consuming devices.

Thus, the automatic coupling units may serve as a quick coupling system allowing to hurry up the service when providing a decentralized water supply and waste water drain, so that the automatic coupling also serves for a safe connection between the respective interfaces of the aircraft architecture and respective interfaces at the aircraft side.

According to an exemplary embodiment, the aircraft architecture further comprises an aircraft trolley having included the aircraft water supply unit as described above, wherein the container is located inside a trolley housing, wherein the fresh water supply interface is connected to a water tap on top of the aircraft trolley, wherein the waste water drain interface is connected to a water bowl at the top side of the aircraft trolley and below the water tap.

Thus, the aircraft architecture including the aircraft trolley may provide a standalone hand washing unit or a servicing unit allowing to tap water from the water tap and draining the water to the waste water sink. Such a unit may for example be used within an aircraft restroom monument as well as an aircraft galley for providing servicing capacities.

According to an exemplary embodiment, the aircraft trolley further comprises a waste bin and a fire extinguisher for the waste bin, wherein the fire extinguisher takes extinguishing water from at least one of the fresh water volume and the waste water volume.

Thus, the fire extinguisher, which may be mandatorily for a waste bin, may not be provided with a separate extinguishing agent, but may take the content of the fresh water volume and/or the waste water volume for extinguishing a possible fire within the waste bin. It should be noted that the taking of water may be controlled so as to preferably take water from the waste water volume, e.g. grey water, and then to take in a maintained emergency situation also water from the fresh water volume. The aircraft trolley may have a signaling unit signaling the possible take out of fresh water, so that at the next maintenance circle, the aircraft trolley may be checked with respect to disinfection of the fresh water section. As the sum of the fresh water and the waste water remains almost constant, the extinguisher may rely on a more or less guaranteed amount of water as an extinguishing agent regardless whether the freshwater volume is full or empty.

According to an exemplary embodiment, an aircraft monument comprises a toilet unit having a waste water terminal and a local flush system, wherein the flush system has a receptacle for a replaceable flush fluid container, wherein the waste water terminal of the toilet unit is connectable to a centralized waste water system of an aircraft.

Thus, an aircraft monument may be provided which may be easily connected to for example already existing waste water drain systems on a centralized base, but providing a possibility of a decentralized supply of a flushing fluid. It should be noted that also a plurality of aircraft monuments as described above may be provided within an aircraft, wherein the plurality of aircraft monuments with their respective waste water terminals may be connected to a centralized waste water draining system, wherein for example at least a part of the plurality of aircraft monuments may have a decentralized local flush system.

According to an exemplary embodiment, the aircraft monument further comprises a bay for receiving an aircraft trolley as described above, wherein the aircraft trolley is secured in use with the aircraft monument so that the water tap of the aircraft trolley may be reached from within the aircraft monument.

Thus, an aircraft monument may be provided with an easy exchangeable hand wash unit in form of an aircraft trolley, so that the entire hand wash system may easily be exchanged during service or maintenance.

According to an exemplary embodiment, an aircraft comprises at least one of the architectures as described above and a plurality of aircraft monuments as described above, as well as a centralized vacuum waste water system, wherein the waste water terminal of each of the plurality of toilet units is connected to the centralized vacuum waste water system.

Thus, an aircraft is provided, which realizes a hybrid water/waste system architecture, wherein such an aircraft may easily be adapted with the supply of additional architectures as described above.

According to an exemplary embodiment, the aircraft further comprises at least one of the water supply systems as described above, wherein the water supply system is removable and secured with respect to the aircraft.

This water supply system may be for example a hand wash unit which may be removable and secured with respect to for example a toilet monument of the aircraft. Additionally or alternatively, the water supply system may be a galley trolley with for example an automatic coupling system for water supply and waste water drain being removable and secured with respect to a galley of the aircraft.

According to an exemplary embodiment, the aircraft further comprises an aircraft monument according to the above described aircraft monument, wherein the waste water terminal is connected to the centralized vacuum waste water system.

According to an exemplary embodiment, an aircraft water supply unit comprises a container, a fresh water supply interface and a waste water drain interface, wherein the container includes a fresh water volume and a waste water volume, wherein the fresh water volume is connected to the fresh water supply interface, wherein the waste water volume is connected to the waste water drain interface, wherein the fresh water volume has at least one flexible wall section, wherein the waste water volume has at least one flexible wall section, wherein the flexible wall section of the waste water volume is movable towards the flexible wall section of the fresh water volume upon filling the waste water volume with waste water.

Thus, also an independent aircraft water supply unit being independent from the aircraft architecture may be provided, having a shared space being used by the fresh water volume as well as the waste water volume commonly.

According to an exemplary embodiment, the aircraft water supply unit further comprises a heater, wherein the heater is functionally coupled between the fresh water volume and the fresh water supply interface.

Thus, also independently from the aircraft architecture, the water supply unit may be provided with a heater for providing hot water.

According to an exemplary embodiment, the fresh water volume and the waste water volume of the aircraft water supply unit share at least one wall formed by the flexible wall section of the waste water volume and the flexible wall of the fresh water volume.

Thus, also independently from the aircraft architecture, the water supply unit may have the corresponding flexible wall sections of the fresh water volume and the waste water volume, so as to share the volume by forming a common wall between the fresh water volume and the waste water volume. It should be noted that the flexible wall may be formed by a single layer or a laminated layer formed by the flexible wall section of the fresh water volume and the flexible wall section of the waste water volume.

According to an exemplary embodiment, an aircraft trolley includes an aircraft water supply unit as described above, wherein the container is located inside a trolley housing, wherein the fresh water supply interface is releasably connectable to a water supply system of fresh water consuming devices, wherein the waste water drain interface is releasably connectable to a drain system of the fresh water consuming devices.

Thus, the aircraft trolley may be designed as a water/waste water supply/drain trolley for a galley. It should be noted that such an aircraft trolley serving as a water supply/waste water drain unit for an aircraft galley may be designed for example as a full size trolley or a half size trolley. In particular when using a half size trolley, a normal service trolley may be provided together with the half size trolley within a particular full size bay. In particular, a half size aircraft trolley having included an aircraft water supply unit may be received in a deeper section of the bay, wherein a further half size trolley being used for service purposes within the cabin may be positioned in an outer portion of the bay, so that the aircraft trolley having included an aircraft water supply unit as well as the half size aircraft trolley for cabin services purposes may be accommodated within one full size bay. This full size bay at the very deep portions may have automatic coupling portions corresponding to the fresh water supply interface and the waste water drain interface of the aircraft trolley having included an aircraft water supply unit.

According to an exemplary embodiment, an aircraft trolley having included an aircraft water supply unit as described above may have a container being located inside a trolley housing, wherein the fresh water supply interface is connected to a water tap on top of an aircraft trolley, wherein the waste water drain interface is connected to a water bowl on the top side of the aircraft trolley and below the water tap.

Thus, also a standalone aircraft trolley may be provided for being used for example as a separate hand washing unit.

According to an exemplary embodiment, the aircraft trolley as described above further comprises a waste bin and a fire extinguisher for a waste bin, wherein the fire extinguisher takes extinguishing water from at least one of the fresh water volume and the waste water volume.

Thus, also outside an aircraft architecture as described above, an aircraft trolley having a waste bin and a fire extinguisher may be provided.

According to an exemplary embodiment, the fire extinguisher of the aircraft trolley comprises a control unit for controlled water taking from either of the fresh water volume and the waste water volume upon a respective fill level.

Thus, also outside an aircraft architecture as described above, an aircraft trolley with a fire extinguisher may be provided having a respective controlled water taking from either the fresh water volume and the waste water volume.

It should be noted that the above features may also be combined. The combination of the above features may also lead to synergetic effects, even if not explicitly described in detail.

These and other aspects of the present invention will become apparent from and elucidated with respect to the embodiments described hereinafter.

### BRIEF DESCRIPTION OF THE DRAWINGS

Exemplary embodiments of the present invention will be described in the following with reference to the following drawings.
- Figure 1: illustrates a general overview on a hybrid aircraft architecture having a combined decentralized and centralized water supply and waste water drain system.
- Figure 2: illustrates the general concept of a water/waste system including the branches potable water system and waste water system.
- Figure 3: illustrates an exemplary embodiment of a hybrid aircraft architecture seen from a cross-sectional view.
- Figure 4: illustrates an exemplary embodiment of an aircraft monument having included a toilet unit and a hand washing unit.
- Figure 5: illustrates a schematical overview on an aircraft galley having included a galley sub module/galley water trolley.
- Figure 6: illustrates a schematical overview on a galley sub module/galley water trolley.
- Figure 7: illustrates a scale of an aircraft galley with a plurality of bays for receiving full size or half size trolleys.
- Figure 8: illustrates a schematical structure of an aircraft water supply unit.

### DETAILED DESCRIPTION OF EXEMPLARY EMBODIMENTS

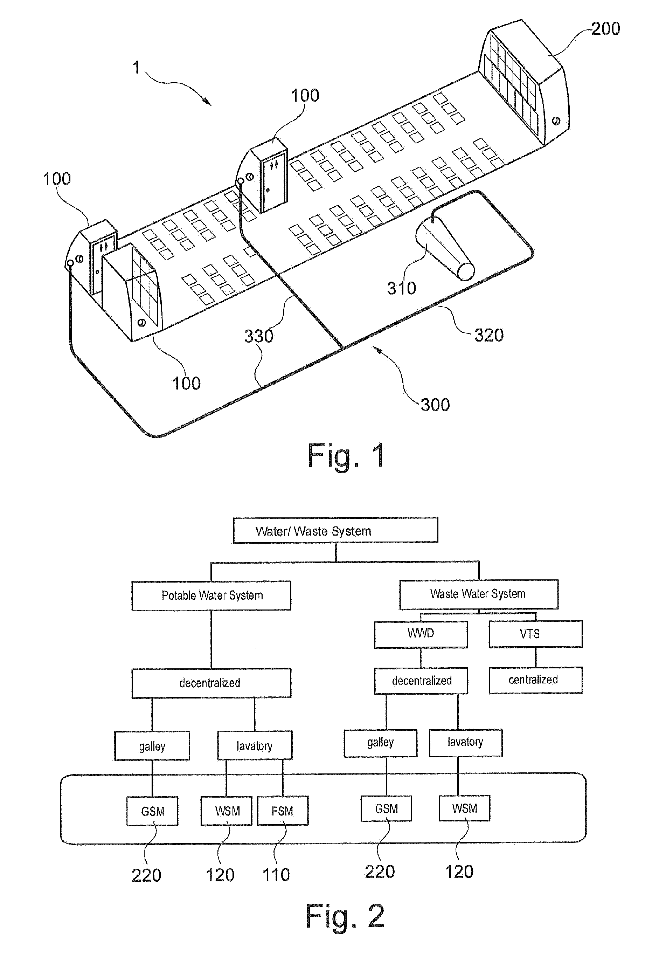

Figure 1 illustrates a schematical overview of an aircraft architecture according to an exemplary embodiment. The aircraft structure 1 has for example a plurality of aircraft toilets or toilet monuments 100 and one or more aircraft galleys or galley monuments 200. At least two of the aircraft monuments 100, like for example toilet monuments are connected with a waste water drain 330 to a waste water system 300. The waste water system 300 for example has a waste water collecting drain 320, draining into a waste water collecting container or a waste water collecting tank 310. Thus, the waste water system include the waste water drain 330, the waste water collecting drain 320 and the waste water collecting container 310 to form a centralized waste water system 300. The structure of the aircraft architecture will be described in some more detail with respect to Figure 2.

It should be noted that waste water may be grey water and black water. One possible concept of the invention is to centralize the black water system and to de-centralize the white water system. In addition the grey water may also be de-centralized, in particular together with a white water system to provide de-centralized units like trolleys. Although some embodiments of the invention deal with de-centralized grey water, it is not excluded that also an alternative or additional centralized grey water system may be provided.

Even if some embodiments described herein deal with toilet monuments having a centralized waste water drain, also a galley monument may be supplied with a centralized waste water drain.

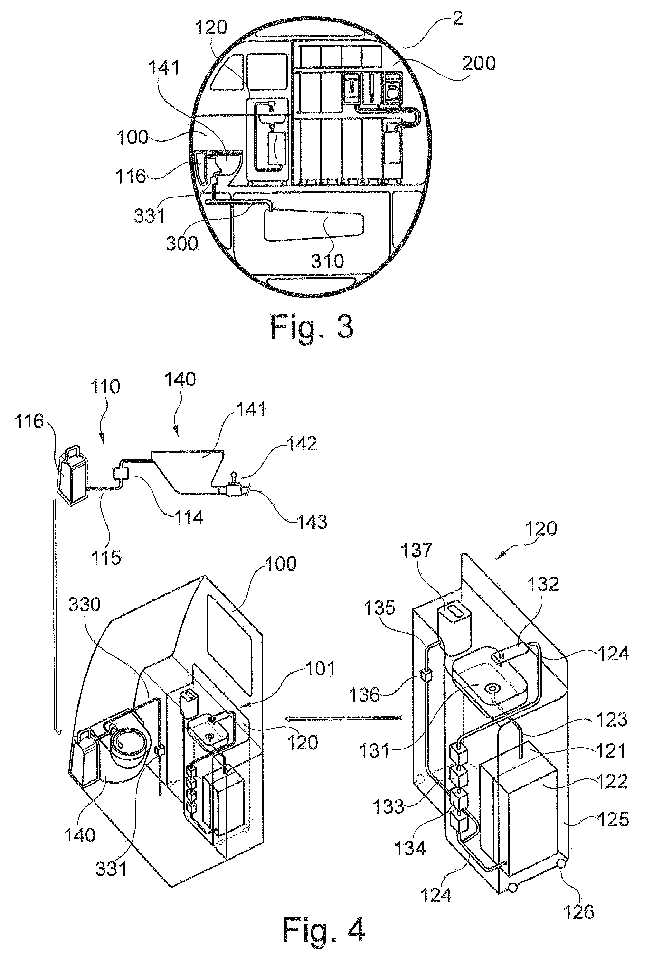

Figure 2 illustrates a general possible structure of a water/waste system of an aircraft. The described water/waste system as a hybrid system reduces the reconfiguration effort as well as the test and installation effort. Such a system combines the advantages of a central and a de-central system by applying an intelligent mixing of a decentralized units and centralized units according to need. In particular, the water/waste system has a de-centralized potable water and waste water drain system for grey water, and a centralized vacuum toilet system for black water. Thus, the entire architecture leads to a reduction of manufacturing costs, a reduction of reconfiguration costs, and increases the reliability of the entire system. Only a reduced number of parts is required also leading to reduction of recurring costs and increased flexibility. The water/waste system according to Figure 2 comprises a potable water and a waste water system. The waste water system may be subdivided in a vacuum toilet system VTS and the waste water drain system WWD. The waste/water system (potable water system, waste water drain system, and vacuum toilet system) employ operational characteristics that allow proper functioning throughout the entire flight envelope including ground operation. The base of this solution are self-sufficient modules to fulfill the requirements of the potable and waste water drain system. The vacuum toilet system VTS may be designed in accordance to the centralized approach. The potable water system may be designed according to the decentralized approach which means no fluid interfaces between the monuments like lavatory and galley, and the cabin/under floor installations. The grey water system may be designed decentralized as well. All necessary potable water functions or sources may be included within the monuments, respectively the designated potable water sub modules. Also the waste water drain sub systems may be included within the potable water sub module. The waste water drain system may comprise a drainage assembly, a grey water drain valve, grey water drain lines, grey water tank, and valves. This may exclude the waste water from the lavatory wash basin and the galley, which will be considered within the water sub module WSM and the galley sub module GSM. Inter alia, three different sub modules may be considered, like the water sub module WSM, which may include parts of the potable water system and the waste water drain system, for example in each lavatory, the galley sub module GSM, which may include parts of potable water system and waste water drain system for example in each wet galley, and a flush sub module FSM, which may be provided in each lavatory. In the following, the galley sub module 220, the water sub module 120 and the flush sub module 110 will be described in further detail with respect to Figures 3, 4, 5, 6, and 7.

The WSM may be situated in the lavatory and include the wash bowl also. The dimensions of the module assembly are comparable with a full-size trolley within a galley or can be adapted to the lavatory monument design. A water pump may supply potable water to a heater and a water tap. Grey water may flow back into the same tank, where a flexible tank wall may separates the potable water from the grey water. To service the WSM, the structural WSM interfaces must be disconnected and with the help of the mounted wheels at the bottom of the trolley the module can be rolled out of the aircraft through the aisle. This might be done during the galley catering process, without interfering the turn-around-time. Outside the aircraft the system drainage can be done and shall be possible by gravity. Another drained, maintained, cleaned and filled WSM may be pushed into the lavatory. Potable water may be stored in a potable water tank within the WSM and may be transferred after usage in a waste water tank. During servicing at the airport, the waste water may be drained completely (if necessary the potable water as well) and the potable water will be filled. Next to the water tank the waste bin may integrated in the WSM, therefore it may be necessary to provide a fire extinguisher. A power supply and data transfer for the WSM may be contactless and possibly must not be charged in the service. Further on this approach enables that no connection of plugs need to take place anymore. The principle of the contactless power supply and data transfer could be made possible by using the inductive transmission, which is funded by the electromagnetic induction. A data transfer in both directions as well as energy transfer from the primary coil to the secondary coil is possible at the same time. Thereby the primary coil may be installed on a fixed aircraft part (e.g. under floor area of the lavatory monument) and the secondary coil may be fixed on the moveable part (water sub-module). Another component is a water-tap. In addition it is possible to integrate a waste bin at the right side of the WSM.

The FSM may be like the WSM and the GSM self-sufficient and movable. It may have a small extra fluid tank, which may be located in the lavatory, next to the toilet. It may contain water with a special cleaning agent to assure a sufficient cleaning of the toilet bowl and the pipes. Furthermore it may prevent the soiling of the toilet waste tank and the vacuum system pipes. This tank may be designed as a single-use box with an extra nipple, which can be opened by a cut and can be exchanged easily during the catering process. That implies a complete separation of the FSM from the WSM. It should be noted that the FSM may also be provided as a multi-use or a refillable unit.

The GSM, may be situated in a galley. It ma be a movable module, with mounted wheels and may be located at the already existing trolley position. Therefore it may have the same dimension like a half-size trolley, whereby the (fluid) weight may be limited to the structure/fixation principle. The GSM may be located in one of the half-size trolley positions below the water tap. Because of this close vicinity only a short installation path and thereby a small piping may necessary. A small water pump supplies potable water to the water tap and/or other water consuming units. The grey water may flow back into the same tank, where a flexible tank wall may separate the potable water from the grey water. To service the GSM the structural and hydraulic GSM interfaces must be disconnected and with the help of the mounted wheels at the trolley bottom the module can be rolled out of the aircraft. This might be done during the galley catering process, without interfering the turn-around-time. Outside the aircraft the system drainage can be done and shall be possible by gravity. Another drained, cleaned, maintained and filled GSM can pushed into the half-size trolley position.

The water trolley may have the same size like a standard (ARINC 810) half-size galley trolley which is used for cabin service, so it can be easily integrated into the present galley architecture. Compared to the water sub-module may feature less components, because the purpose of this module is to provide potable water and store grey water only. Equipment like water heater, water tap, sink or coffee machine may part of the galley monument.

The power supply and the data transfer for the GSM may be contactless and possibly must not be charged in the service. Further on this approach enables that no connection of plugs need to take place anymore. The principle of the contactless power supply and data transfer could be made possible by using the inductive transmission, which is funded by the electromagnetic induction. A data transfer in both directions as well as energy transfer from the primary coil to the secondary coil is possible at the same time. Thereby the primary coil may be installed on a fixed aircraft part (under floor area, galley monument) and the secondary part may be fixed on the moveable part (galley sub-module). Furthermore it is necessary to ensure a fast and simple servicing of the replaceable modules by the catering crew. This is given by an automatic lock.

Figure 3 illustrates a cross-sectional view of an exemplary embodiment. The cross-sectional view of Figure 3 of an aircraft 2 illustrates an aircraft galley 200 as well as an aircraft monument 100. The aircraft monument 100 may include a toilet bowl 141 and a flush fluid container 116. The toilet bowl 141 may have a waste water terminal 143 (as can be seen in Fig. 4) and a toilet bowl drain. The toilet bowl drain may be connected to a waste water vacuum valve 331 before draining into the waste water system 300. The waste water system 300 including the waste water collecting container 310 is described in further detail with respect to Figure 1. The cross-sectional view of the aircraft 2 of Figure 3 further illustrates a water sub module or water trolley 120. The water trolley 120 may be located beside the toilet bowl and may be included within a toilet monument 100. This will be described in further detail with respect to Figure 4.

Figure 4 illustrates the design of an aircraft monument 100. The aircraft monument 100 may include a toilet functional unit 140 including a toilet bowl 141, draining into a toilet bowl drain or a waste water terminal 143 via a toilet bowl valve 142. This toilet bowl drain may be connected to a centralized waste water system 300, which is illustrated in further detail in Figure 1 and Figure 3. The toilet unit 140 may be flushed by way of a flush sub module 110 which flush sub module 110 may have a flush pipe 115 and a flush valve 114 to control flushing. The flush sub module 110 may further comprise a flush fluid container 116, being connected to for example a receptacle for receiving the flush fluid container 116, which receptacle is not illustrated in further detail. The receptacle may be connected to the flush pipe 115, so as the deliver the flush fluid via the flush valve 114 to the toilet bowl 141. This toilet unit 140 including the flush sub module 110 may be arranged within the aircraft monument 100. As can be seen, the toilet bowl drain is connected to the waste water drain 330 which via an optional waste water vacuum valve 331 may be connected to the centralized water system 300. The aircraft monument 100 may further have a bay 101 for receiving a water sub module. The water sub module 120 may be releasably coupled within the bay 101. The water sub module or water trolley 120 is further described in detail on the right hand side illustration of Figure 4. The water trolley 120 may for example comprise a waste water volume or a grey water volume or a reservoir 121 and a fresh water volume or fresh water reservoir 122. The fresh water volume 122 may be connected to a fresh water supply pipe or a fresh water supply interface 124. The fresh water supply pipe then may be connected to a water tap 132 for supplying water for hand washing purposes for example. The fresh water is supplied by the water tap 132 and may drain into the sink 131, which sink or water bowl may be connected to the water trolley 120. The sink 131 may be connected to a waste water drain pipe or waste water drain interface 123, draining into the waste water volume 121. In the fresh water supply pipe, further units may be provided, for example a pump unit 133 for pumping the water from the fresh water volume 122 to the water tap 132. In addition, a heater unit 134 may be provided for heating up the water being provided with the water tap 132. Even if not described in further detail with respect to Figure 4, also further devices may be provided, for example controller, filter units, check valves, or water quality analyzing devices. The water trolley 120 may further comprise a fire extinguisher 135, being connected to a waste bin 137. The waste bin may have a fire detector for automatically activating the fire extinguisher. The fire extinguisher may have a fire extinguisher control 136 being able to control the water taken from the fresh water volume and/or the waste water volume. A particular control 136 may detect the fill level of the waste water volume and the fresh water volume and may preferably take extinguishing water from the waste water volume. However, also water from the fresh water volume may be taken for fire extinguishing in emergency. The control unit may have a signal indicator indicating the water taken from the fresh water volume, so that for maintenance the service personal may disinfect the fresh water volume.

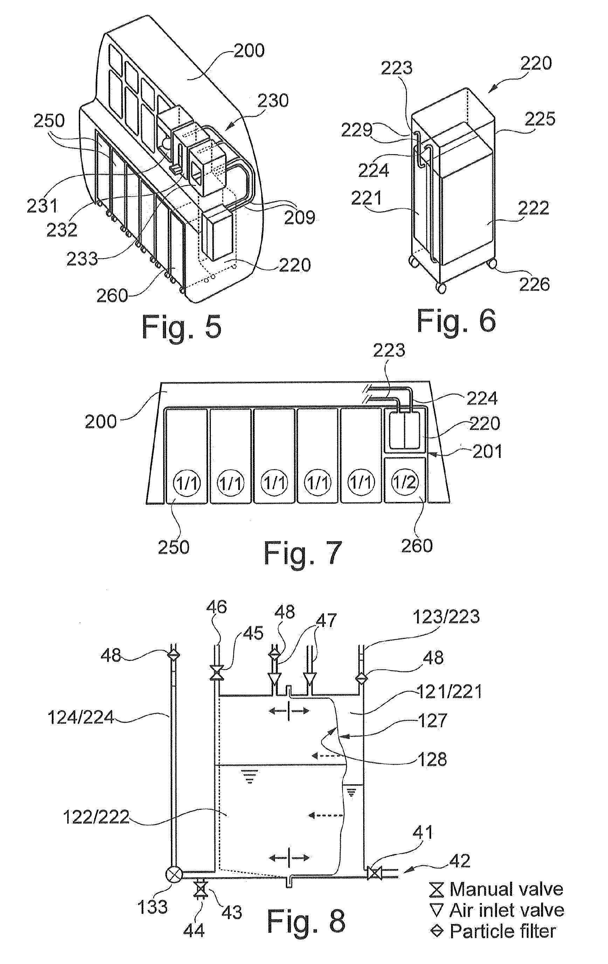

Figure 5 illustrates a schematic perspective overview of an aircraft galley 200. As will be described with respect to Figures 5, 6 and 7, the aircraft galley may have a bay 201 having received a galley sub module or galley water trolley 220. The galley sub module or galley water trolley may be designed as a half size trolley received in the deeper section of the bay 201, as can be seen in Fig. 7. Thus, a further half size trolley for service purposes 260 may be received within the same bay 201. Besides the above described bay 201, further bays may be provided for receiving for example full size trolleys for service purposes. It should be noted that the waste water drain interface 223 and the fresh water supply interface 224 in form of a waste water drain connection and a fresh water supply connection, respectively may also be provided in other bays as the illustrated bay 201. In particular, a plurality of the illustrated bays now receiving full size trolleys in Figure 7 may be provided with respective waste water drain connections and fresh water supply connections at the aircraft side.

Returning to Figure 5, the aircraft galley may have for example an automatic coupling unit 209 in the galley bay so that the waste water drain interface and the fresh water supply interface may automatically couple with the aircraft-sided coupling units so that a safe and secure coupling of the fresh water and the waste water connection are established. The galley may have water consuming units 230, like for example a coffee machine 231, a water dispenser 232, or other consuming units 233.

A more detailed overview of a galley sub module 220 can be seen in Figure 6. The galley sub module or galley water trolley 220 in Figure 6 illustrates a container 225 including a waste water volume or grey water volume also referred to as a waste water reservoir 221, as well as a fresh water volume or a fresh water reservoir 222. The waste water drain interface 223 may be connected to the waste water volume. The fresh water supply interface 224 may be connected to the fresh water volume. The waste water drain interface 223 and the fresh water supply interface 224 may have also automatic coupling units 229 at the trolley side, so as to cooperate with the automatic coupling units 209 in the galley. For a better moving and flexibility, the galley sub module or galley water trolley 220 may have a couple of wheels or rollers 226. The container 225 corresponds to the container 125 of the water sub module 120 in Figure 4, as well as the wheels and the rollers 226 correspond to the wheels and rollers 126 of the water sub module or water trolley 120 of Figure 4.

Figure 8 illustrates the general buildup of a water sub module or a galley sub module. Some of the units described with respect to Figure 8 are optional. The schematic overview of Figure 8 illustrates a fresh water volume 122, 222 and a waste water volume 121, 221. The fresh water volume 122, 222 has a flexible wall section 128. In the same way, the waste water volume 121, 221 has a flexible wall section 127. The wall section 127 and the wall section 128 may form a common wall between the waste water volume and the fresh water volume. If the fresh water volume includes a high volume or amount of water, as illustrated in Figure 8, the flexible wall of the wall section 128, 127 moves towards the waste water volume and reduces the waste water volume. When consuming the fresh water, the fresh water amount decreases and at the same time the waste water amount increases. Thus, the flexible wall moves towards the fresh water volume and increases the waste water volume, as illustrated by the arrows. A fresh water supply pipe or fresh water supply interface 124, 224 is connected to the fresh water volume 122, 222. Water from the fresh water volume may be fed by the pump unit 133. Within the fresh water supply pipe 124, 224, a particle filter 48 may be provided. The water pumped by the pump unit 133 will be supplied to for example a water consumer 230 or a water tap 132, not illustrated in Figure 8. The waste water, for example received by a waste water drain or a sink 131, will drain via the waste water drain pipe 123, 223. Also within this line, a particle filter 48 may be supplied. In addition, the water supply system 120, 220 may have a fresh water filling pipe 46 and a particular fresh water filling valve 45. Both, the fresh water volume 122, 222 as well as the waste water volume 121, 221 may have a drain valve. The drain valve of the fresh water volume is denoted as 43 so that fresh water may drain into a fresh water drain pipe 44. At the same time, the waste water volume may be provided with a waste water drain valve 41 allowing the waste water to drain into the waste water drain pipe 42. Both volumes the fresh water volume as well as the waste water volume may be provided with ventilation pipes 47 each including for example an air inlet valve. It should be noted that the flexible wall sections 127, 128 may be equipped with an integrated mesh of electrodes so as to electronically monitor the wall. It should be noted that the plurality of monuments and toilet units may be organized by the cabin management system to secure the even usage of the lavatories.

It should be noted that the invention may also be applied to ships, busses, and trains as well as larger motor homes, and therefore is not limited to aircraft applications.

It should be noted that the term "comprising" does not exclude other elements or steps and that the indefinite articles "a" or "an" do not exclude a plurality. Also elements described in association with the different embodiments may be combined. It should be noted that the reference signs in the claims shall not be construed as limiting the scope of the claims.

### Reference list

- 1: aircraft structure
- 2: aircraft
- 41: waste water drain valve
- 42: waste water drain pipe
- 43: fresh water drain valve
- 44: fresh water drain pipe
- 45: fresh water filling valve
- 46: fresh water filling pipe
- 47: ventilation pipe
- 48: particle filter
- 100: aircraft monument
- 101: bay for receiving a water sub module
- 110: flush sub module
- 114: flush valve
- 115: flush pipe
- 116: flush fluid container
- 120: water sub module / water trolley
- 121: waste / grey water volume / reservoir
- 122: fresh water volume / reservoir
- 123: waste water drain pipe / waste water drain interface
- 124: fresh water supply pipe / fresh water supply interface
- 125: container
- 126: wheel / roller
- 127: flexible wall section waste water
- 128: flexible wall section fresh water
- 131: water bowl / sink
- 132: water tap
- 133: pump unit
- 134: heater unit
- 135: fire extinguisher
- 136: fire extinguisher control
- 137: waste bin
- 140: toilet unit
- 141: toilet bowl
- 142: toilet bowl valve
- 143: toilet bowl drain / waste water terminal
- 200: aircraft galley
- 201: bay for receiving a galley sub module
- 209: automatic coupling unit in galley
- 220: galley sub module / galley water trolley
- 221: waste /grey water volume / reservoir
- 222: fresh water volume / reservoir
- 223: waste water drain interface / waste water drain connection
- 224: fresh water supply interface / fresh water supply connection
- 225: container
- 226: wheel / roller
- 229: automatic coupling unit at trolley
- 230: water consuming units
- 231: coffee machine
- 232: water dispenser
- 233: other consuming unit
- 250: full size trolley
- 260: half size trolley
- 300: waste water system
- 310: waste water collecting container / tank
- 320: waste water collecting drain
- 330: waste water drain
- 331: waste water vacuum valve

## Claims

1. Aircraft architecture comprising:
a plurality of toilet units (140) each having a waste water terminal (143), wherein at least one of the plurality of toilet unit comprises a local flush system (110),
wherein the flush system has a receptacle for a replaceable flush fluid container (116),
wherein the waste water terminal of each of the plurality of toilet units is connectable to a centralized waste water system (300) of an aircraft.

2. Aircraft architecture according to claim 1, further comprising:
at least one aircraft water supply unit (120, 220) each having a container (125, 225),
a fresh water supply interface (124, 225)and
a waste water drain interface (123, 223),
wherein the container includes fresh water volume (122, 222) and a waste water volume (121, 221),
wherein the fresh water volume is connected to the fresh water supply interface,
wherein the waste water volume is connected to the waste water drain interface.

3. Aircraft architecture according to claim 2,
wherein the fresh water volume (122, 222) has at least one flexible wall section (128),
wherein the waste water volume (121, 221) has at least one flexible wall section (127),
wherein the flexible wall section of the waste water volume is movable towards the flexible wall section of the fresh water volume upon filling the waste water volume with waste water.

4. Aircraft architecture according to any one of claims 2 to 3, further comprising a heater (134), wherein the heater is functionally coupled between the fresh water volume (122, 222) and the fresh water supply interface (124, 224).

5. Aircraft architecture according to any one of claims 3 to 4, wherein the fresh water volume (122, 222) and the waste water volume (121, 221) share at least one wall formed by the flexible wall section (127) of the waste water volume and the flexible wall (128) of the fresh water volume.

6. Aircraft architecture according to any one of claims 2 to 5, further comprising an aircraft trolley having included the aircraft water supply unit (220), wherein the container (225) is located inside a trolley housing, wherein the fresh water supply interface (224) is releasably connectable to a water supply system of fresh water consuming devices (230, 231, 232, 233), wherein the waste water drain interface (223) is releasably connectable to a drain system of the fresh water consuming devices.

7. Aircraft architecture according to claim 6, wherein at least one of the fresh water supply interface (224) and the waste water drain interface (223) comprise automatic coupling units (229) being adapted for automatic coupling upon rolling the aircraft trolley into a respective bay (201), the bay comprising a counter coupling unit (209) of a water supply system of fresh water consuming devices (230, 231, 232, 233).

8. Aircraft architecture according to any one of claims 2 to 5, further comprising an aircraft trolley having included the aircraft water supply unit (120), wherein the container (125) is located inside a trolley housing, wherein the fresh water supply interface (124) is connected to a water tap (132) on top of the aircraft trolley, wherein the waste water drain interface (123) is connected to a water bowl (131) at the top side of the aircraft trolley and below the water tap.

9. Aircraft trolley according to claim 8, wherein the aircraft trolley further comprises a waste bin (137) and a fire extinguisher (135) for the waste bin, wherein the fire extinguisher takes extinguishing water from at least one of the fresh water volume (122) and the waste water volume (121).

10. Aircraft trolley according to claim 9, wherein the fire extinguisher (135) comprises a control unit (136) for controlled water taking from either of the fresh water volume (122) and the waste water volume (121) upon a respective fill level.

11. Aircraft monument comprising:
a toilet unit (140) having a waste water terminal (143) and a local flush system (110),
wherein the flush system has a receptacle for a replaceable flush fluid container (116),
wherein the waste water terminal of the toilet unit is connectable to a centralized waste water system (300) of an aircraft (2).

12. Aircraft monument according to claim 11, further comprising a bay (101) for receiving an aircraft trolley according to any one of claims 8 to 10,
wherein aircraft trolley is secured in use within the aircraft monument (100) so that the water tab (132) may be reached from within the aircraft monument.

13. Aircraft comprising:
at least one of an architecture (1) of any one of claims 1 to 10 and a plurality of aircraft monuments of any one of claims 11 and 12,
a centralized vacuum waste water system (300),
wherein the waste water terminal (143) of each of the plurality of toilet units (140) is connected to the centralized vacuum waste water system.

14. Aircraft according to claim 13, further comprising at least one of the water supply systems (120, 220) according to claims 4 to 6, wherein the water supply system is removable and secured with respect to the aircraft (2).

15. Aircraft according to any one of claims 13 and 14, further comprising an aircraft monument (100) according to any one of claims 11 and 12, wherein the waste water terminal (143) is connected to the centralized vacuum waste water system (300).

16. Aircraft water supply unit comprising:
a container (125, 225),
a fresh water supply interface (124, 224)
a waste water drain interface (123, 223)
wherein the container includes a fresh water volume (122, 222) and a waste water volume (121, 221),
wherein the fresh water volume is connected to the fresh water supply interface,
wherein the waste water volume is connected to the waste water drain interface,
wherein the fresh water volume has at least one flexible wall section (128),
wherein the waste water volume has at least one flexible wall section (127),
wherein the flexible wall section of the waste water volume is movable towards the flexible wall section of the fresh water volume upon filling the waste water volume with waste water.

17. Aircraft water supply unit according to claim 16, further comprising a heater (134), wherein the heater is functionally coupled between the fresh water volume (122, 222) and the fresh water supply interface (124, 224).

18. Aircraft water supply unit of any one of claims 16 and 17, wherein the fresh water volume (122, 222) and the waste water volume (121, 221) share at least one wall formed by the flexible wall section (127) of the waste water volume and the flexible wall (128) of the fresh water volume.

19. Aircraft trolley having included an aircraft water supply unit (220) according to any one of claims 16 to 18, wherein the container (225) is located inside a trolley housing, wherein the fresh water supply interface (224) is releasably connectable to a water supply system of fresh water consuming devices (230, 231, 232, 233), wherein the waste water drain interface (223) is releasably connectable to a drain system of the fresh water consuming devices.

20. Aircraft trolley having included an aircraft water supply unit (120) according to any one of claims 16 to 18, wherein the container (125) is located inside a trolley housing, wherein the fresh water supply interface (124) is connected to a water tap (132) on top of the aircraft trolley, wherein the waste water drain interface (123) is connected to a water bowl (131) at the top side of the aircraft trolley and below the water tap.

21. Aircraft trolley according to claim 20, wherein the aircraft trolley further comprises a waste bin (137) and a fire extinguisher (135) for the waste bin, wherein the fire extinguisher takes extinguishing water from at least one of the fresh water volume (122) and the waste water volume (121).

22. Aircraft trolley according to claim 21, wherein the fire extinguisher (135) comprises a control unit (136) for controlled water taking from either of the fresh water volume (122) and the waste water volume (121) upon a respective fill level.

## Amended claims

### Amended claims in accordance with Rule 137(2) EPC.

**1.** Aircraft architecture comprising:
a plurality of toilet units (140) each having a waste water terminal (143),
wherein at least one of the plurality of toilet unit comprises a local flush system (110),
wherein the local flush system has a receptacle for a replaceable flush fluid container (116),
wherein the waste water terminal of each of the plurality of toilet units is connectable to a centralized waste water system (300) of an aircraft (2).

**2.** Aircraft architecture according to claim 1, further comprising:
at least one aircraft water supply unit (120, 220) each having a container (125, 225),
a fresh water supply interface (124, 225)and a waste water drain interface (123, 223),
wherein the container includes fresh water volume (122, 222) and a waste water volume (121, 221),
wherein the fresh water volume is connected to the fresh water supply interface,
wherein the waste water volume is connected to the waste water drain interface.

**3.** Aircraft architecture according to claim 2,
wherein the fresh water volume (122, 222) has at least one flexible wall section (128),
wherein the waste water volume (121, 221) has at least one flexible wall section (127),
wherein the flexible wall section of the waste water volume is movable towards the flexible wall section of the fresh water volume upon filling the waste water volume with waste water.

**4.** Aircraft architecture according to any one of claims 2 to 3, further comprising a heater (134), wherein the heater is functionally coupled between the fresh water volume (122, 222) and the fresh water supply interface (124, 224).

**5.** Aircraft architecture according to any one of claims 3 to 4, wherein the fresh water volume (122, 222) and the waste water volume (121, 221) share at least one wall formed by the flexible wall section (127) of the waste water volume and the flexible wall (128) of the fresh water volume.

**6.** Aircraft architecture according to any one of claims 2 to 5, further comprising an aircraft trolley having included the aircraft water supply unit (220), wherein the container (225) is located inside a trolley housing, wherein the fresh water supply interface (224) is releasably connectable to a water supply system of fresh water consuming devices (230, 231, 232, 233), wherein the waste water drain interface (223) is releasably connectable to a drain system of the fresh water consuming devices.

**7.** Aircraft architecture according to claim 6, wherein at least one of the fresh water supply interface (224) and the waste water drain interface (223) comprise automatic coupling units (229) being adapted for automatic coupling upon rolling the aircraft trolley into a respective bay (201), the bay comprising a counter coupling unit (209) of a water supply system of fresh water consuming devices (230, 231, 232, 233).

**8.** Aircraft architecture according to any one of claims 2 to 5, further comprising an aircraft trolley having included the aircraft water supply unit (120), wherein the container (125) is located inside a trolley housing, wherein the fresh water supply interface (124) is connected to a water tap (132) on top of the aircraft trolley, wherein the waste water drain interface (123) is connected to a water bowl (131) at the top side of the aircraft trolley and below the water tap.

**9.** Aircraft architecture according to claim 8, wherein the aircraft trolley further comprises a waste bin (137) and a fire extinguisher (135) for the waste bin, wherein the fire extinguisher takes extinguishing water from at least one of the fresh water volume (122) and the waste water volume (121).

**10.** Aircraft architecture according to claim 9, wherein the fire extinguisher (135) comprises a control unit (136) for controlled water taking from either of the fresh water volume (122) and the waste water volume (121) upon a respective fill level.

**11.** Aircraft monument comprising:
a toilet unit (140) having a waste water terminal (143) and a local flush system (110),
wherein the flush system has a receptacle for a replaceable flush fluid container (116),
wherein the waste water terminal of the toilet unit is connectable to a centralized waste water system (300) of an aircraft (2).

**12.** Aircraft monument according to claim 11, further comprising a bay (101) for receiving an aircraft trolley according to any one of claims 8 to 10,
wherein aircraft trolley is secured in use within the aircraft monument (100) so that the water tab (132) may be reached from within the aircraft monument.

**13.** Aircraft comprising:
at least one of an architecture (1) of any one of claims 1 to 10 and a plurality of aircraft monuments of any one of claims 11 and 12,
a centralized vacuum waste water system (300),
wherein the waste water terminal (143) of each of the plurality of toilet units (140) is connected to the centralized vacuum waste water system.

**14.** Aircraft according to claim 13, further comprising at least one of the water supply systems (120, 220) according to claims 4 to 6, wherein the water supply system is removable and secured with respect to the aircraft (2).

**15.** Aircraft according to any one of claims 13 and 14, further comprising an aircraft monument (100) according to any one of claims 11 and 12, wherein the waste water terminal (143) is connected to the centralized vacuum waste water system (300).

**16.** Aircraft trolley having included an aircraft water supply unit (120, 220) comprising:
a container (125, 225),
a fresh water supply interface (124, 224)
a waste water drain interface (123, 223)
wherein the container includes a fresh water volume (122, 222) and a waste water volume (121, 221),
wherein the fresh water volume is connected to the fresh water supply interface,
wherein the waste water volume is connected to the waste water drain interface,
wherein the fresh water volume has at least one flexible wall section (128),
wherein the waste water volume has at least one flexible wall section (127),
wherein the flexible wall section of the waste water volume is movable towards the flexible wall section of the fresh water volume upon filling the waste water volume with waste water, wherein the container (125, 225) is located inside a trolley housing,
wherein that the fresh water supply interface (124, 224) is releasably connectable to a water supply system of fresh water consuming devices (230, 231, 232, 233), wherein the waste water drain interface (123, 223) is releasably connectable to a drain system of the fresh water consuming devices.

**17.** Aircraft trolley according to claim 16, further comprising a heater (134), wherein the heater is functionally coupled between the fresh water volume (122, 222) and the fresh water supply interface (124, 224).

**18.** Aircraft trolley according to any one of claims 16 and 17, wherein the fresh water volume (122, 222) and the waste water volume (121, 221) share at least one wall formed by the flexible wall section (127) of the waste water volume and the flexible wall (128) of the fresh water volume.

**19.** Aircraft trolley) according to any one of claims 16 to 18, wherein the container (125) is located inside a trolley housing, wherein the fresh water supply interface (124) is connected to a water tap (132) on top of the aircraft trolley, wherein the waste water drain interface (123) is connected to a water bowl (131) at the top side of the aircraft trolley and below the water tap.

**20.** Aircraft trolley according to claim 19, wherein the aircraft trolley further comprises a waste bin (137) and a fire extinguisher (135) for the waste bin, wherein the fire extinguisher takes extinguishing water from at least one of the fresh water volume (122) and the waste water volume (121).

**21.** Aircraft trolley according to claim 20, wherein the fire extinguisher (135) comprises a control unit (136) for controlled water taking from either of the fresh water volume (122) and the waste water volume (121) upon a respective fill level.
